# EUROPEAN PATENT SPECIFICATION

(11) **EP 2 030 776 B1**
(45) Date of publication and mention of the grant of the patent: **03.12.2014**
(21) Application number: 08160570.1
(22) Date of filing: 16.07.2008
(51) Int. Cl.: B32B 9/02, C14B 7/02

(54) **Method for producing a composite laminate fabric**
Verfahren zur Herstellung eines Verbundwerkschichtstoffes
Procédé de fabrication du stratifié composite

(30) Priority: 16.07.2007 IT RM20070396
(43) Date of publication of application: 04.03.2009
(73) Proprietor: Dainese S.p.A., 36060 Molvena (VI) (IT)
(72) Inventor: Ronco, Luigi, 36060, Molvena VI (IT)
(74) Representative: Manfrin, Marta

(56) References cited:
- WO-A-00/22948
- WO-A-00/30847
- US-A- 3 713 938

## Description

The present invention refers to a method for producing a laminate fabric on a base of leather or the like, in particular for obtaining an abrasion- and tear-resistant end fabric, preferably exhibiting breathable, wind- and water-proof properties.

In sports practices, in particular in motorbiking, and above all in competitions, the driver should be protected from the consequences of a possible fall, and specifically from an impact with asphalt.

In most cases, such falls occur as a result of a wrong path or of a mistake during the approaching to or the running through a curve. When such occurrences take place at a high speed, the driver is no more able to balance the motorbike and slides disastrously against asphalt along with the vehicle, or is unseated therefrom.

However, the driver, by being in motion with respect to the road, continues to advance, scraping against asphalt and in case impacting against all he/she meets along his/her way, until stopping.

In order to avoid serious consequences on the motorbike driver from such accidents, suits are used that are made of thick leather, very resistant to both abrasion and tearing.

However, such garments entail the big drawback of being much less than comfortable in use. For instance, leather is not breathable; therefore, above all when external temperature is high, the driver feels a marked sensation of hotness. On the other hand, driving motorbikes under limiting conditions, as it is the case during competitions, entails great physical effort, and therefore perspiration and entailed temperature rise inside the suit. The temperature inside the suit and the sensation of hotness increase yet again in case of sunny and sultry days.

The garment leather offers no barrier whatsoever to sun rays; on the contrary, quite often it is dark-coloured due to sponsoring needs, as ad inserts need to stand out clearly in TV images.

Air relative humidity further increases breathing difficulty, therefore increasing also the discomfort to the pilot.

To increase comfort, substantially two solutions have been adopted, specifically to improve the suit wearer's breathability.

On the one hand, suits have been used in which some portions have a plurality of holes, so as to foster breathability and flow of air from the outside. However, the presence of holes enormously limits the strength of the fabric, and therefore only limited portions of the garment can be punched. In particular, usually such portions are located on the chest and partly on the arms, which are not particularly exposed to contact with asphalt during falls, but are also the parts less exposed to the sun.

Therefore, at the body parts that would most require to benefit from a breathable effect, e.g. back and legs, a punched fabric cannot be used, as it would excessively compromise the strength of the garment.

Always in order to improve driver's comfort, the garments produced according to the known art comprise a lining sewn onto the leather of which they are made, preventing a direct contact of the latter with the body.

Such a lining is generally perforated so as to allow at least partially the breathability, but, by being sewn onto the non-breathable leather, it has a very modest effect; rather, it soon retains sweat and the body stays in contact with a wet fabric, increasing the discomfort.

Therefore, the present invention stems from the technical problem of providing a method for producing a composite fabric based on the strength properties of the leather, but that may effectively couple to the latter other fabrics, improving e.g. the overall breathability properties, obviating the drawbacks mentioned above with reference to the known art.

Lamination processes, i.e., processes for producing multilayer composite fabrics, are known, according to which each panel of fabric that is to be sewn with the other ones for producing an item of clothing is equipped just with the abovementioned laminate structure. All panels thus made are then joined with seams or the like to produce the end item of clothing.

However, the Inventors of the present patent application found that such a process is extremely lengthy, toilsome and therefore expensive, above all when various panels of laminate fabric have to be joined with sealed seams, e.g. to guarantee the impermeableness of the end item.

The hereto-disclosed drawbacks and technical problems are solved by a method for producing a composite laminate fabric, preferably breathable, according to claim 1 and a portion of composite fabric having a laminate structure according to claim 12.

The present invention provides several relevant advantages. The main advantage lies in that the method of the invention, by providing first the cutting and the sewing of the strong layer - typically of leather - that makes up a portion of the end garment, and subsequently the lamination, i.e., the coupling with other fabric(s), greatly simplifies the seaming modes, in particular when said seams have to be sealed, and anyhow to reduce the layers of fabric involved by seams "exposed" to the outside.

Moreover, it is possible to preliminarily carry out the punching of the leather in order to make it breathable, in this case as well with a remarkable simplification of the production process.

In addition, the coupling of the base leather layer with different fabrics on different portions of the garment is greatly simplified. In particular, it is allowed the utmost flexibility in composing the layers of an item, it being possible to differentiate the various zones of the item with different laminations (with no need to have many laminate fabrics, all different thereamong).

Moreover, the method of the invention allows to simply and effectively carry out other processing steps concomitantly to the lamination, e.g. the inserting of protections, decorations, etc. among the layers, with no need to provide further dedicated layers of fabric.

Other advantages, features and the operation steps of the present invention will be made evident from the following detailed description of some embodiments thereof, given by way of example and not for limitative purposes. Reference will be made to the figures of the annexed drawings, wherein:
- Figure 1 is a perspective view referring to a first step of cutting of the method according to the present invention;
- Figure 2 is a perspective view referring to a second step of sewing of the method of Figure 1;
- Figure 3 is a perspective view referring to a third step of laminating of the method of Figure 1;
- Figures 4 and 5 show respectively a partially sectional perspective view and a side sectional view of a second fabric applied in the laminating step of Figure 3; and
- Figure 6 is a perspective view referring to a variant embodiment of the laminating step of Figure 3.

The method of the present invention will now be described with reference to a preferred embodiment in which it is used for producing a portion of a sportswear item of clothing, in particular the rear portion (back) of a jacket or suit for use in (even) competitive motorbiking. Always according to the preferred embodiment that will be described, said jacket portion has an effectively breathable structure, allowing to overcome the drawbacks mentioned in the introduction with reference to the known art.

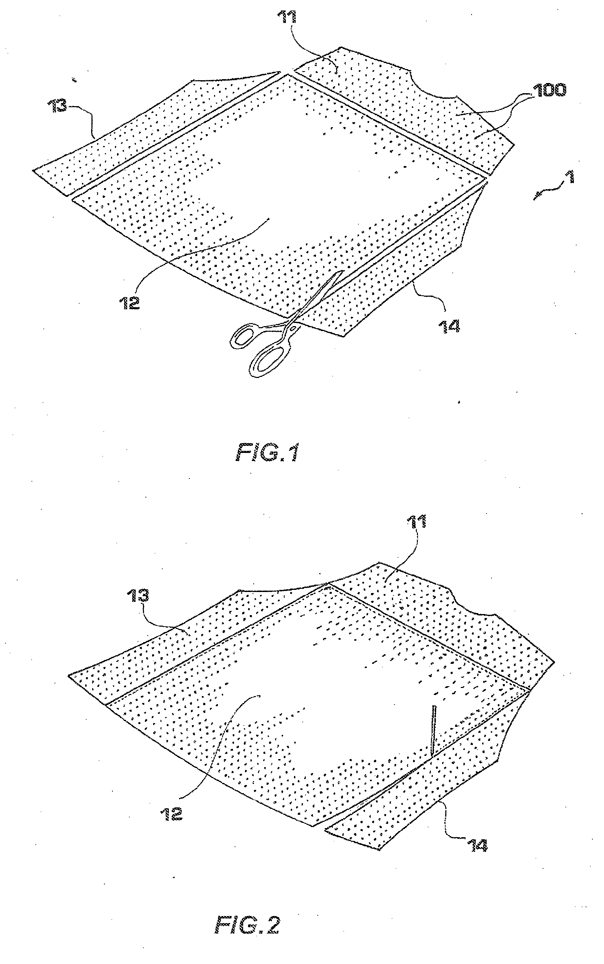

Referring initially to Figure 1, first of all it is provided a first fabric, in the present example leather or a fabric of similar strength suitable for the aforediscussed use in motorbiking, generally denoted by 1.

The fabric 1 is cut in a manner such as to subdivide it into panels, in the present example a first top panel 11, a second bottom panel 12, and two side panels, respectively denoted by 13 and 14, suitable for making a substantially plane portion of the end item of clothing, in the present example the above-mentioned back portion of a jacket or suit.

Always in the present example, it is also provided a step of punching the first fabric 1, step that may be carried out before or after the described cutting step. The holes, denoted by 100, are suitably made in order to allow passage of air between the inside and the outside of the end item of clothing. E.g., the holes have a diameter of 0.8 mm. The presence of holes on the leather layer contributes to make the fabric softer, though not compromising the mechanical features of the latter thanks to the presence of the layers that will be described below (in particular a net-like support that will be introduced shortly).

As it is shown in Figure 2, the panels 11-14 are then joined, typically by sewing or stitching or other equivalent joining method, to produce a base layer of the portion of the above-mentioned item of clothing.

The above-introduced punching step might be carried out even subsequently or concomitantly to said joining step.

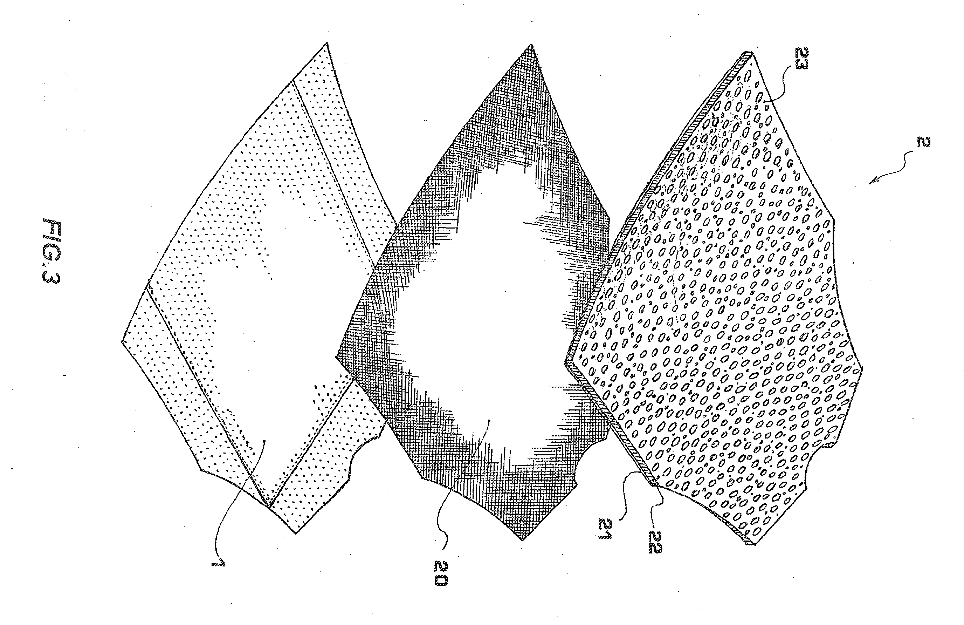

Then, as shown in Figure 3, to the base layer made up by the first fabric 1 it is associated a further layer, in the present example made up by a second single fabric, i.e. a fabric common to all parts of the base layer, generally denoted by 2.

Said second fabric 2 comprises a cellular structure that, according to a preferred embodiment, is fixed to the leather layer 1 by means of a breathable film 20 provided with at least one adhesive film (not illustrated in the drawings), preferably thermo-adhesive.

Thus, the breathable film 20 is interposed between the leather layer 1 and the second fabric 2.

Said breathable film 20 extends over the entire leather layer 1 in order to cover it, therefore the former covers the latter; conveniently, the film 20 has two opposite faces, to each one of which said adhesive film can be applied, of which a first face is associated to the leather layer 1 and a second face is associated to the cellular structure 2. In particular, the film could be first of all fixed to the leather layer 1 and then utilized to join the layer 1 with the cellular structure 2.

Therefore, the breathable film 20 is sandwich-like interposed between the leather layer 1, and therefore all of the panels 11-14, and the cellular structure 2. In other words, the breathable film 20 has the respective face completely adhering to, or in contact with the panels 11-14.

The breathable film 20 is permeable to water vapour and impermeable to water. Such a permeability/impermeability is attained by selecting a suitable material.

According to a variant embodiment, also the adhesive film associated to the breathable film 20 may be punched with holes of suitable size to allow passage of water vapour. The punching of the adhesive film may be carried out, e.g., together with the base material 1 prior to the applying of the breathable film 20 and the cellular structure 2.

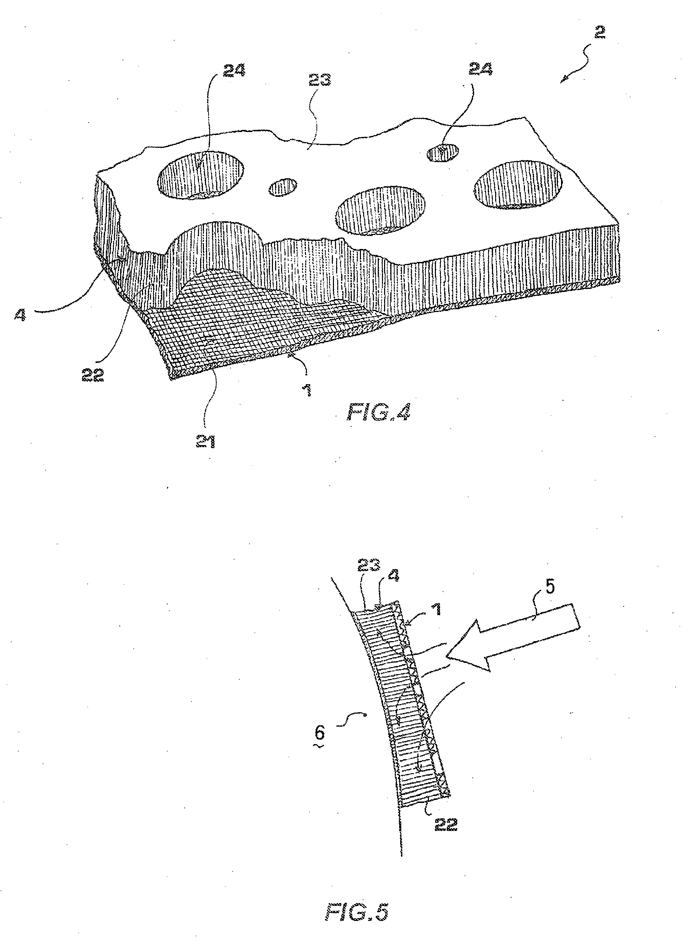

Referring now also to Figures 4 and 5, the cellular structure 2 in turn comprises three different portions, each one performing a different function. In particular, the cellular structure 2 comprises a net-like support 21 through which the cellular structure 2 is fixed on the leather layer 1.

The use of such a net-like support 21 proves particularly advantageous, as on the one hand the openings exhibited by the net allow passage of air, in cooperation with the holes 100 of the leather layer 1, on the other hand the net 21 is conveniently made up by woven orthogonal threads, which may be in a material highly resistant to tensile stress and breaking, e.g. plastic fibres.

Thus the fibres, fixed to the leather layer 1, contribute to enhance the mechanical features of the composite fabric, which otherwise would be weakened by the presence of the holes 100.

In fact, the presence of the thermo-adhesive film between breathable film 20 and cellular structure 2 allows to fix substantially all of the threads making up the net-like support 21 to the leather layer 1, and therefore said threads can effectively contribute to the strength of the material during stresses.

If the cellular structure 2 were applied prior to the making of the holes 100 on the leather layer 1, such a punching operation might generate tearing to the threads making up the net-like support 21, compromising its mechanical features.

The cellular structure 2 further comprises a soft-material portion 22 connected to the net-like support 21, portion 22 which it also is capable of allowing passage of air, and a cover surface 23.

Moreover, the soft-material portion 22 has the task of keeping the leather layer 1 at a sufficient distance from the wearer's body, so as to create an interspace 4, inside which an air flow 5, entering from the holes 100 present in the leather layer 1, can freely flow.

It should be noted that, just as it is intended for use in motorbiking, surely the composite fabric according to the present invention will always be exposed to large air flows. The presence of an interspace 4 between driver's body 6 and leather layer 1 allows to create preferential paths for the air flow 5 acting as body coolant.

The soft-material portion 22 is preferably made by means of a plurality of threads woven between the net-like support 21 and the cover surface 23.

The cover surface 23 comes into contact with the driver's body 6; therefore, it is conveniently made of a soft material, pleasant to the touch, e.g. of cotton or alike synthetic fibre, and has a plurality of openings 24 substantially defining the aforementioned cellular structure.

In fact, the threads making up the soft portion 22 cannot extend at the openings 24 and therefore the portion 22 will not be continuous, but it also will have openings substantially in correspondence with the openings 24, thereby practically creating cells connected thereamong.

In the present example embodiment, the openings 24 have a substantially oval shape, in two different and geometrically alternating sizes. E.g., the openings 24 have a diameter of 3 mm and of 6 mm, respectively.

Evidently, other configurations of shape and arrangements are possible, defining however the interspace 4 and the aforedescribed cells.

The described structure proves particularly advantageous, as the cover surface makes the composite fabric comfortable to the contact with the body, and the presence of the openings 24 allows to permeate the same with the air flow entering the composite fabric via the holes in the leather layer 1, passing in the interspace 4.

If the openings 24 were absent, the body would not effectively benefit from air coming from the outside, since also the cover surface 23, in order to be pleasant to the touch, cannot have perfect breathing features, and above all, by tending to wet in use due to sweating, it would end up excessively clinging to the body and blocking the air flow.

Moreover, the use of a net-like support 21 and of a weave of cotton, or anyhow of a similar synthetic fabric, in the cover surface, makes the production of the cellular structure particularly simple, and the air flow effective.

In fact, the soft-material portion 22, allowing air flow, can be simply produced by weaving threads between the net 21 and the cotton weave 23, threads that therefore will arrange themselves substantially orthogonal to the portion 21 and the surface 23, thereby effectively conveying air to the body.

Moreover, the presence of the interspace 4 entails another remarkable advantage, in use, of the composite fabric according to the present invention when exposed to sun rays.

In this case, in fact, the interspace 4 allows to prevent solar radiation from arriving directly at the body from the leather layer 1, thereby causing a marked sensation of discomfort. Instead, solar radiation will heat air present in the interspace 4 that, however, just for the flow generated during the driving, will be continuously circulating, therefore creating no discomfort to the driver.

The presence of the holes 100 on the leather layer 1 contributes to make the composite fabric softer, though not compromising its mechanical features thanks to the net-like support 21.

The holes 100 and also the presence of the soft-material portion 22 allows the composite fabric to follow body shapes to a greater extent, and to improve freedom of motion, further providing an improved aesthetical aspect in use.

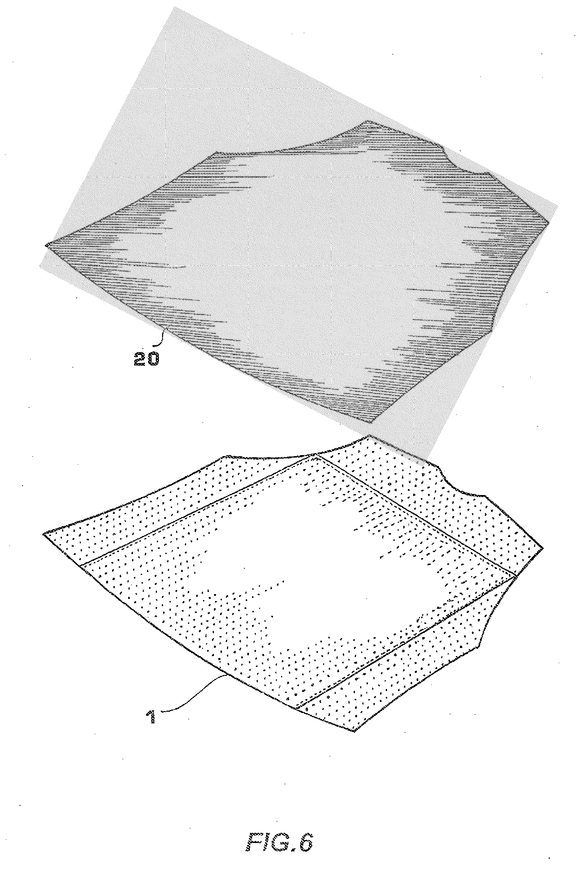

Referring now to Figure 6, according to a simplified variant embodiment the method of the invention is applied to laminate onto the base leather layer 1 the above-mentioned breathable film 20, which is fixed by means of an adhesive film, preferably thermo-adhesive, to the leather layer 1.

Essentially, in the embodiment of Figure 6 it is not provided the second further layer including the cellular structure, but merely the base leather layer 1 and the breathable film 20, the latter having the same features of the breathable film of the preceding embodiment. In this case as well the adhesive film may be pre-punched together with the base leather layer 1.

It will be understood that the invention has been described with reference to the production of a leather layer intended for contact with the outside and to the subsequent applying thereon of one or more inner layers; actually, the method can be applied in a mirrored manner, i.e., by producing first an inner layer with the suitable seams and then applying thereon, in a single step, the outer layers.

The fact that the making of the seams for joining the panels 11-14 of the first fabric 1 be carried out prior to the laminating step makes it unnecessary to subsequently impermeabilize the individual seams, e.g. by means of a sealing tape. In fact, according to the method of the present invention the seams are concurrently impermeabilized by the same layers, in particular the breathable film 20, which are subsequently laminated on the first fabric 1. This allows to simplify the production process, as it is eliminated at least the step of arranging a sealing tape on the seams. In addition, this allows to avoid the need to make seams crossing or directly involving the cellular structure 2 or the breathable material layer 20, thereby avoiding to damage them and/or to compromise their breathing properties.

On the basis of the description reported above, by now it will be better appreciated how the method according to the present invention is specifically suitable for producing protective garments for motorbiking practice, like e.g. full suits or jackets, among other things improving their wearability.

It will be understood that a garment may comprise portions of the aforedescribed composite fabric at the arms, legs, chest, and shoulders, in no way compromising the protective ability of the garment in case of contact with asphalt.

The present invention has hereto been described with reference to preferred embodiments thereof. It is understood that other embodiments might exist, all falling within the concept of the same invention, and all comprised within the protective scope of the claims hereinafter.

## Claims

1. A method for producing a composite fabric having laminate structure, comprising the steps of:
(a) providing a plurality of panels (11-14) of a first fabric (1), apt to make a substantially plane portion of the end composite fabric;
(b) joining said panels (11-14) so as to form a base portion of the end composite fabric;
(c) associating to said base portion at least one breathable film (20), different from said first fabric (1), which is permeable to water vapour and impermeable to water,
wherein a further layer (2) made of a second fabric is associated to said breathable film (20), so that said breathable film (20) is interposed between said base portion (1) and said further layer (2), and
wherein said first or second (2) fabric has a cellular structure (2), in turn comprising: a net-like support (21) to be fixed to the other one (1) of said first or second fabric; a soft-material portion (22), apt to allow passage of air; and a cover surface (23), said soft-material portion (22) being apt to create an interspace (4) between the other one of said first or second fabric (1) and said cover surface (23).

2. The method according to the preceding claim, wherein said breathable film (20) covers said base portion (1).

3. The method according to claim 1 or 2, providing a step of interposing a first adhesive film between said base portion (1) and said breathable film (20), said first adhesive film being permeable to water vapour.

4. The method according to the preceding claim, wherein said adhesive film has a plurality of holes.

5. The method according to claim 1, providing a step of interposing a second adhesive film between said breathable film (20) and said at least one further layer (2), said second adhesive film being permeable to water vapour.

6. The method according to any one of the preceding claims, providing a step of punching said first fabric (1) carried out prior to said laminating step (c).

7. The method according to any one of the preceding claims, wherein said step (b) is carried out by sewing, or stitching, or other equivalent joining method.

8. The method according to any one of the preceding claims, wherein said first (1) or second (2) fabric is leather.

9. The method according to claim 1, wherein said soft-material portion (22) is made by means of threads extending substantially between said net-like support (21) and said cover surface (23).

10. The method according to claim 1, wherein said cover surface (23) has a plurality of openings (24).

11. The method according to claim 10, wherein said openings (24) extend also at said soft-material portion (22), said threads not extending at said openings (24).

12. A portion of composite fabric having a laminate structure produced according to the method of any one of the preceding claims.

13. A garment, in particular for use in sports, comprising at least one portion of composite fabric according to claim 12.

14. The garment according to claim 13, comprising a jacket or suit for use in sports having a back region apt to be placed at a wearer's back, wherein said portion of composite fabric is arranged at said back region.

## Patentansprüche

1. Verfahren zur Herstellung eines Verbundgewebes mit einer Laminatstruktur umfassend die folgenden Schritte:
(a) Bereitstellen mehrerer Panele (11 bis 14) eines ersten Gewebes (1), die geeignet sind, um einen im Wesentlichen ebenen Abschnitt eines Endverbundgewebes auszubilden;
(b) Verbinden dieser Panele (11 bis 14) derart, dass sie einen Basisabschnitt des Endverbundgewebes ausbilden;
(c) Verbinden zumindest eines atmungsaktiven Films (20) mit diesem Basisabschnitt, der sich vom ersten Gewebe (1) unterscheidet, und der durchlässig für Wasserdampf und undurchlässig für Wasser ist;
wobei eine weitere Schicht (2), ausgebildet aus einem zweiten Gewebe mit dem atmungsaktiven Film (20) derart verbunden wird, sodass der atmungsaktive Film (20) zwischen dem Basisabschnitt (1) und der weiteren Schicht (2) angeordnet ist, und wobei das erste oder das zweite (2) Gewebe eine zellartige Struktur (2) aufweist, die wiederum umfasst:
Einen netzartigen Träger (21), der auf der anderen einen (1) des ersten oder zweiten Gewebes befestigt wird, ein weicher Materialabschnitt (22), der geeignet ist, um den Durchgang von Luft zu erlauben, und eine Abdeckoberfläche (23), wobei der weiche Materialabschnitt (22) geeignet ist, um einen Zwischenraum (4) zwischen der anderen einen des ersten oder zweiten Gewebes (1) und der Abdeckoberfläche (23) auszubilden.

2. Verfahren gemäß dem vorstehenden Anspruch, wobei der atmungsaktive Film (20) den Basisabschnitt (1) abdeckt

3. Verfahren gemäß einem der Ansprüche 1 oder 2, und zudem Vorsehen eines Schrittes zum Anordnen eines ersten Klebefilms zwischen dem Basisabschnitt (1) und dem atmungsaktiven Film (20), wobei der erste Klebefilm durchlässig für Wasserdampf ist.

4. Verfahren gemäß einem der vorstehenden Ansprüche, wobei der Klebefilm eine Vielzahl von Löchern aufweist.

5. Verfahren gemäß Anspruch 1, und zudem Vorsehen eines Schrittes zum Anordnen eines zweiten Klebefilms zwischen dem atmungsaktiven Film (20) und der zumindest einen weiteren Schicht (2), wobei der zweite Klebefilm durchlässig für Wasserdampf ist.

6. Verfahren gemäß einem der vorstehenden Ansprüche, und zudem Vorsehen eines Schrittes des Lochens des ersten Gewebes (1), der ausgeführt wird vor dem Laminierungsschritt (c).

7. Verfahren gemäß einem der vorstehenden Ansprüche, wobei der Schritt (b) mittels Nähen oder Steppen oder einer anderen gleichartigen Verbindungsmethode ausgeführt wird.

8. Verfahren gemäß einem der vorstehenden Ansprüche, wobei das erste (1) oder zweite (2) Gewebe Leder ist.

9. Verfahren gemäß Anspruch 1, wobei der weiche Materialabschnitt (22) mittels Fäden, die sich im Wesentlichen zwischen dem netzartigen Träger (21) und der Abdeckoberfläche (23) erstrecken, ausgebildet wird.

10. Verfahren gemäß Anspruch 1, wobei die Abdeckoberfläche (23) mehrere Öffnungen (24) aufweist.

11. Verfahren gemäß Anspruch 10, wobei die Öffnungen (24) sich auch durch den weichen Materialabschnitt erstrecken, wobei die Fäden sich nicht in diese Öffnungen (24) erstrecken.

12. Ein Abschnitt eines Verbundgewebes aufweisend eine Laminatstruktur hergestellt mit einem Verfahren gemäß einem der vorstehenden Ansprüche.

13. Ein Kleidungsstück, im Speziellen zur Verwendung beim Sport, umfassend zumindest einen Abschnitt eines Verbundgewebes gemäß Anspruch 12.

14. Kleidungsstück gemäß Anspruch 13, umfassend eine Jacke oder einen Anzug zum Verwenden im Sport, aufweisend einen Rückenabschnitt der geeignet ist, um am Rücken eines Trägers angeordnet zu werden, wobei dieser Abschnitt aus Verbundgewebe in dem Rückenbereich angeordnet ist.

## Revendications

1. Procédé pour produire un tissu composite ayant une structure stratifiée, comprenant les étapes consistant à :
(a) prévoir une pluralité de panneaux (11-14) d'un premier tissu (1), apte à réaliser une partie sensiblement plane du tissu composite final ;
(b) assembler lesdits panneaux (11-14) afin de former une partie de base du tissu composite final ;
(c) associer à ladite partie de base, au moins un film perméable à l'air (20), différent dudit premier tissu (1), qui est perméable à la vapeur d'eau et imperméable à l'eau,
dans lequel une couche supplémentaire (2) réalisée avec un second tissu est associée audit film perméable à l'air (20), de sorte que ledit film perméable à l'air (20) est intercalé entre ladite partie de base (1) et ladite couche supplémentaire (2), et
dans lequel ledit premier ou second tissu (2) a une structure cellulaire (2) comprenant à son tour :
un support en forme de filet (21) à fixer sur l'autre (1) parmi ledit premier ou second tissu ; une partie de matériau souple (22) apte à permettre le passage de l'air ; et une surface de recouvrement (23), ladite partie de matériau souple (22) étant apte à créer un espace intermédiaire (4) entre l'autre parmi ledit premier ou second tissu (1) et ladite surface de recouvrement (23).

2. Procédé selon la revendication précédente, dans lequel ledit film perméable à l'air (20) recouvre ladite partie de base (1).

3. Procédé selon la revendication 1 ou 2, comprenant une étape consistant à intercaler un premier film adhésif entre ladite partie de base (1) et ledit film perméable à l'air (20), ledit premier film adhésif étant perméable à la vapeur d'eau.

4. Procédé selon la revendication précédente, dans lequel ledit film adhésif a une pluralité de trous.

5. Procédé selon la revendication 1, comprenant une étape consistant à intercaler un second film adhésif entre ledit film perméable à l'air (20) et ladite au moins une couche supplémentaire (2), ledit second film adhésif étant perméable à la vapeur d'eau.

6. Procédé selon l'une quelconque des revendications précédentes, comprenant une étape consistant à poinçonner ledit premier tissu (1), réalisée avant ladite étape de stratification (c).

7. Procédé selon l'une quelconque des revendications précédentes, dans lequel ladite étape (b) est réalisée par un procédé de couture ou de piqûre ou un autre procédé d'assemblage équivalent.

8. Procédé selon l'une quelconque des revendications précédentes, dans lequel ledit premier (1) ou second (2) tissu est du cuir.

9. Procédé selon la revendication 1, dans lequel ladite partie de matériau souple (22) est réalisée au moyen de fils s'étendant sensiblement entre ledit support en forme de filet (21) et ladite surface de recouvrement (23).

10. Procédé selon la revendication 1, dans lequel ladite surface de recouvrement (23) a une pluralité d'ouvertures (24).

11. Procédé selon la revendication 10, dans lequel lesdites ouvertures (24) s'étendent également au niveau de ladite partie de matériau souple (22), lesdits fils ne s'étendant pas au niveau desdites ouvertures (24).

12. Partie de tissu composite ayant une structure de stratifié produite selon le procédé selon l'une quelconque des revendications précédentes.

13. Vêtement, en particulier destiné à être utilisé pour le sport, comprenant au moins une partie du tissu composite selon la revendication 12.

14. Vêtement selon la revendication 13, comprenant un gilet ou costume destiné à être utilisé pour le sport, ayant une région de dos apte à être placée sur le dos d'un utilisateur, dans lequel ladite partie de tissu composite est agencée au niveau de ladite région de dos.
